# DEMANDE DE BREVET EUROPEEN

(11) **EP 2 747 400 A1**
(43) Date de publication de la demande: **25.06.2014**
(21) Numéro de dépôt: 13199274.5
(22) Date de dépôt: 23.12.2013
(51) Int. Cl.: H04M 3/56

(54) **Procédé d'établissement d'une conférence téléphonique entre plusieurs terminaux mobiles**

(30) Priorité: 24.12.2012 FR 1262752
(71) Demandeur: Orange, 75015 Paris (FR)
(72) Inventeur: Le Huerou, Emmanuel, 22700 SAINT QUAY PERROS (FR); Beaufils, Eric, 22450 LANGOAT (FR)
(74) Mandataire: Regimbeau

(57) **Abrégé**

L'invention concerne un procédé d'établissement d'une conférence entre un organisateur et une pluralité de participants, au moyen d'un serveur de conférence connecté à un réseau de communication, l'organisateur et les participants disposant chacun d'un terminal connecté au réseau de communication et ayant une identité numérique, le procédé comprenant les étapes suivantes :
sélection par l'intermédiaire d'une interface utilisateur affichée dans un terminal de l'organisateur d'un ensemble de participants à la conférence ;
détermination pour chaque participant sélectionné d'un identifiant numérique ;
génération d'une requête de conférence suite à ladite sélection, ladite requête comprenant lesdits identifiants numériques ;
transmission au serveur de conférence de ladite requête;
création par le serveur de conférence d'un pont de conférence ayant une identité numérique et transmission au terminal de l'organisateur de l'identité numérique du pont de conférence;
établissement automatique par le terminal de l'organisateur d'une communication avec le pont de conférence.

## Description

### DOMAINE TECHNIQUE GENERAL

L'invention concerne l'établissement d'une conférence entre plusieurs personnes distantes et plus précisément entre un organisateur de la conférence et plusieurs participants.

### ETAT DE LA TECHNIQUE

Pour établir une conférence téléphonique entre plusieurs personnes distantes, chacune disposant d'un terminal mobile connecté à un réseau de communication (par exemple GSM), un organisateur appelle un premier participant et une fois qu'un canal de communication est ouvert entre l'organisateur et le premier participant, l'organisateur peut ajouter un second participant. Une fois ce second participant ajouté, l'organisateur peut ajouter un troisième participant et ainsi de suite jusqu'à N participants, N>1.

Ces manipulations sont réalisées via une interface mise en oeuvre dans un téléphone intelligent (en anglais, *« smartphone* ») qui permet de proposer aux utilisateurs une interface ergonomique.

Toutefois, le nombre de manipulations est important. On peut en effet estimer à, au minimum 2+4N interactions entre l'organisateur et son terminal pour pouvoir mettre en relation l'organisateur avec les N participants.

En effet, via l'interface, il faut deux interactions pour sélectionner et lancer l'appel avec le premier participant. Il faut en outre quatre interactions par participants : une pour déclencher l'ajout d'un participant (par appui sur une touche d'un terminal par exemple), une pour sélectionner le contact, une pour lancer l'appel vers le participant et enfin une interaction pour basculer l'appel initié en mode conférence.

Il existe par conséquent un besoin de simplifier l'établissement d'une conférence entre plusieurs participants.

### PRESENTATION DE L'INVENTION

L'invention propose de pallier au moins un de ces inconvénients.

A cet effet, l'invention propose un procédé d'établissement d'une conférence entre un organisateur et une pluralité de participants, au moyen d'un serveur de conférence connecté à un réseau de communication, l'organisateur et les participants disposant chacun d'un terminal connecté au réseau de communication et ayant une identité numérique, le procédé comprenant les étapes suivantes :
sélection par l'intermédiaire d'une interface utilisateur affichée dans un terminal de l'organisateur d'un ensemble de participants à la conférence ;
détermination pour chaque participant sélectionné d'un identifiant numérique ;
génération d'une requête de conférence suite à ladite sélection, ladite requête comprenant lesdits identifiants numériques ;
transmission au serveur de conférence de ladite requête.

L'invention est avantageusement complétée par les caractéristiques suivantes, prises seules ou en une quelconque de leur combinaison techniquement possible :
- il comprend une étape d'établissement, par le serveur de conférence d'une pluralité de communications vers les terminaux des participants afin de mettre en relation le terminal de l'organisateur avec les terminaux des participants par l'intermédiaire d'un pont de conférence ;
- le serveur de conférence créé un pont de conférence ayant une identité numérique et dans lequel le serveur de conférence transmet au terminal de l'organisateur l'identité numérique du pont de conférence ;
- le terminal de l'organisateur établit une communication avec le pont de conférence ;
- chaque terminal des participants reçoit une communication du serveur de conférence par l'intermédiaire du pont de conférence ;
- les identités numériques des terminaux des participants sont transmises par l'intermédiaire d'une requête satisfaisant au protocole http ;
- l'identité numérique comprend un numéro d'appel téléphonique.

Selon un second aspect, l'invention concerne un serveur de conférence adapté pour établir une conférence téléphonique entre un organisateur et une pluralité de participants, l'organisateur et les participants ayant respectivement des terminaux connectés à un réseau de communication auquel ledit serveur de conférence est connecté, chaque terminal ayant une identité numérique, le serveur de conférence étant configuré pour recevoir d'un terminal de l'organisateur de la conférence téléphonique une requête de conférence suite à une sélection par l'intermédiaire d'une interface utilisateur affichée dans un terminal de l'organisateur d'un ensemble de participants à la conférence, ladite requête comprenant lesdits identifiants numériques.

Le serveur de l'invention est en outre configuré en outre pour établir une pluralité de communications vers les terminaux des participants afin de mettre en relation le terminal de l'organisateur avec les terminaux des participants par l'intermédiaire d'un pont de conférence.

Selon un troisième aspect, l'invention concerne un terminal de communication apte à communiquer avec un serveur de conférence apte à établir une conférence entre un organisateur et une pluralité de participants, les participants disposant chacun d'un terminal connecté à un réseau de communication et ayant une identité numérique, le terminal étant configuré pour
sélectionner par l'intermédiaire d'une interface utilisateur affichée dans ledit terminal un ensemble de participants à la conférence ;
déterminer pour chaque participant sélectionné un identifiant numérique ;
générer une requête de conférence suite à ladite sélection, ladite requête comprenant lesdits identifiants numériques ;
transmettre au serveur de conférence ladite requête.

Selon un quatrième aspect, l'invention concerne un système de communication comprenant au moins trois terminaux (1a, 1b, 1c) tels que définis ci-dessus connectés à un réseau de communication (2), et un serveur de conférence selon l'invention.

Selon un cinquième aspect, l'invention concerne un programme d'ordinateur comprenant des instructions dont l'exécution par un processeur d'un terminal selon l'invention ou d'un serveur selon l'invention provoque la mise en oeuvre de tout ou partie des étapes d'un procédé l'invention.

Les avantages de l'invention sont multiples.

Le nombre d'interactions pour lancer la conférence entre un organisateur et N participants est maintenant de 2+N. En effet, selon l'invention, une seule interaction par participant à ajouter à la conférence est nécessaire, au lieu de quatre interactions par participant à ajouter, dans l'état de la technique exposé plus haut. L'interaction par participant consiste seulement en la sélection du participant à ajouter à la conférence.

En effet, grâce à l'invention, et ce de manière transparente du point de vue de l'organisateur, il est possible de lancer N communications simultanées depuis le terminal de l'organisateur, le serveur de conférence assurant la mise en relation de l'ensemble des participants.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un système de communication conforme à un mode de réalisation de l'invention ;
- la figure 2 illustre un procédé d'établissement d'une conférence conforme à un mode de réalisation de l'invention ;
- la figure 3 illustre un terminal de communication conforme à un mode de réalisation de l'invention ;
- la figure 4 illustre une interface adaptée pour être mise en oeuvre dans un procédé d'établissement d'une conférence selon un mode de réalisation de l'invention.

### DESCRIPTION DETAILLEE DE L'INVENTION

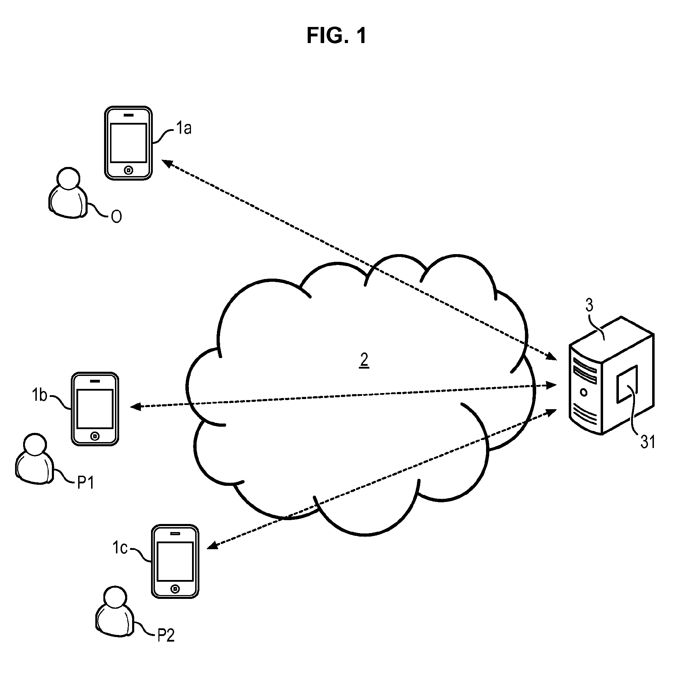

En relation avec la **figure 1****,** un système de communication pour la mise en oeuvre d'un procédé d'établissement d'une conférence est illustré.

De manière non limitative, il est supposé, ici, qu'une conférence est à organiser entre un organisateur O et deux participants P1, P2. L'organisateur et les participants ont, chacun, un terminal 1a, 1b, 1c respectif. Bien entendu, le procédé de l'invention s'applique à un nombre plus élevé de participants.

Par la suite, on utilisera l'expression « participants » pour englober à la fois l'organisateur et les participants invités par l'organisateur.

On précise que l'on entend par « conférence » une technique permettant de faire une conversation avec deux personnes ou plus. Cela comprend les conférences téléphoniques mais aussi les visioconférences au cours desquelles un flux vidéo est échangé.

Les terminaux sont de type vocal de manière à établir une conférence vocale, dite également audioconférence. Cependant, en variante, tous les terminaux peuvent être du type vidéo pour établir une visioconférence, ou peuvent être du type textuel pour établir une conférence par échange de messages textuels.

De manière préférentielle, les terminaux sont du type *« smartphone* » avec un écran tactile.

Les terminaux sont connectés à un réseau de communication. Le réseau de communication 2 est du type non 3GPP (par exemple Wi-Fi, Wimax) ou 3GPP (par exemple Edge, 3G, 3G+, 4G, LTE).

Pour permettre l'établissement de la conférence, le système de communication de la figure 1 comprend un serveur de conférence 3 connu sous l'acronyme MCU (en anglais, *« Multipoint Control Unit* »).

Un tel serveur comprend une unité de traitement de données (non représentée) qui permet de créer, pour les besoins de la mise en relation de tous les terminaux souhaitant participer à la conférence, un pont de conférence 31 grâce auquel tous les participants sont mis en relation de telle manière que chaque participant entend généralement les autres.

Dans le cas d'une visioconférence, le serveur de conférence 3 gère également le routage et l'affichage des différents flux vidéo.

On précise que l'on entend par pont de conférence une unité de contrôle multipoint dédiée à la gestion de la conférence et notamment à la communication multicanaux.

En outre, le serveur de conférence 3 comprend une interface de communication (non représentée) lui permettant de recevoir des commandes incluses dans une requête de conférence. Les commandes précitées peuvent être liées à la sélection des participants par l'organisateur, comme par exemple un ordre de priorité d'entrée en conférence.

Ainsi, le serveur de conférence 3 permet l'établissement d'une conférence, laquelle peut être établie selon un procédé d'établissement d'une conférence tel que décrit ci-après.

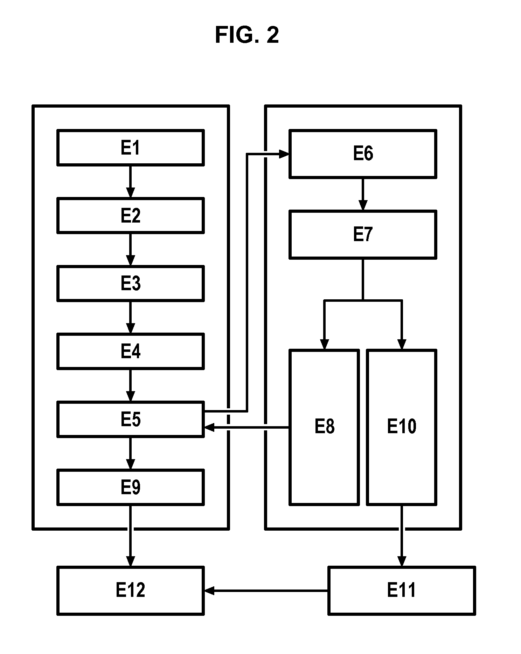

On se réfère maintenant à la **figure 2** qui illustre un procédé d'établissement d'une conférence entre un organisateur et une pluralité de participants conformément à un mode de réalisation de l'invention.

On précise que chaque terminal 1a, 1b, 1c possède une identité numérique qui peut être un numéro d'appel téléphonique ou bien une adresse de courrier électronique (email). Bien entendu l'identité numérique peut être tout moyen d'identification des terminaux.

Selon une variante de réalisation, les identités numériques permettant d'identifier les terminaux sont des identités virtuelles, par exemple des pseudos utilisés par les utilisateurs pour s'identifier dans un réseau social, tel que Facebook™. Dans cette variante, le serveur de conférence 3 comporte un module d'association identité virtuelle/identité réelle, utilisant par exemple une table de correspondance, pour déterminer automatiquement l'identité réelle d'un terminal (numéro de téléphone) à partir de son identité virtuelle (pseudo).

Dans une première étape E1, l'organisateur O de la conférence déclenche le lancement d'une interface utilisateur sur son terminal 1a. Cette interface permet à l'organisateur O d'interagir avec son terminal 1a.

Ensuite, l'organisateur O sélectionne (étape E2) plusieurs participants (N participants, N>1) par l'intermédiaire de l'interface utilisateur exécutée sur son terminal 1a. Cette sélection permet au terminal de déterminer E3 pour chaque participant sélectionné un identifiant numérique.

De manière avantageuse, par sa simplicité d'utilisation, l'interface affiche une liste de participants sélectionnables pour la conférence, et l'organisateur choisit chacun des participants à la conférence en sélectionnant simplement ce participant dans la liste. A cette fin, la sélection peut se faire soit en touchant un élément graphique représentant le participant sur la liste (lorsque l'écran est tactile) soit au moyen d'un stylet ou d'un curseur.

L'organisateur O, toujours par l'intermédiaire de l'interface, valide son choix (étape E4). Cette validation a pour but d'initier la demande de communication à plusieurs (N participants plus l'organisateur) et de déclencher automatiquement la génération E5 d'une requête de conférence comprenant les identifiants numériques des terminaux 1b, 1c de chacun des participants P1, P2 à la conférence laquelle est transmise par le terminal 1a de l'organisateur, à l'étape E6, au serveur de conférence 3. Si les identités numériques des terminaux des participants sont des identités virtuelles, alors une conversion automatique en identités réelles est effectuée par le serveur de conférence 3 par l'intermédiaire du module d'association mentionné plus haut. Ainsi la confidentialité des identités réelles des participants est préservée vis-à-vis de l'utilisateur organisateur.

La requête de conférence peut également inclure des données supplémentaires relatives à la logique d'appel des participants, par exemple, un ordre de priorité des participants pour l'entrée en conférence, ou bien une option d'appel simultané. Ces données supplémentaires sont générées suite à l'interaction entre l'organisateur et l'interface utilisateur affichée dans son terminal.

En pratique, dans le mode de réalisation exposé, la requête de conférence est une requête basée sur le protocole IP (en anglais, « Internet Protocol »), par exemple, une requête HTTP (en anglais, « *Hypertext Transfer Protocol* ») ou SIP (*Session Initiation Protocol*)*.*

Suite à la réception de cette requête, le serveur de conférence 3 crée, à l'étape E7, un pont de conférence 31 ayant une identité numérique, par exemple un numéro de téléphone pour rejoindre la conférence.

Ensuite, le serveur de conférence 3 transmet (E8) au terminal 1a de l'organisateur O l'identité numérique du pont de conférence 31, et plus particulièrement à l'application logicielle du terminal 1a. En particulier, le serveur de conférence 3 envoie en réponse à la requête de conférence des informations sur la manière de joindre le pont de conférence 31, incluant l'identité numérique du pont de conférence 31.

Après avoir reçu l'identité numérique, le terminal 1a de l'organisateur O établit (étape E9) automatiquement une communication avec le pont de conférence 31 en utilisant les informations précitées reçues, par exemple en composant automatiquement le numéro de téléphone du pont de conférence 31.

En outre, et éventuellement de manière simultanée à l'étape E9 ci-dessus, le serveur de conférence 3 établit, lors d'une étape E10, plusieurs communications, respectivement avec chacun des terminaux 1b, 1c des participants P1, P2 afin de mettre en relation (étape E12) le terminal 1a de l'organisateur O avec les terminaux 1b, 1c des participants P1, P2 par l'intermédiaire du pont de conférence 31.

Ainsi, préalablement à la mise en relation E12, chaque terminal 1b, 1c des participants à la conférence reçoit (étape E11) une demande de communication (appel téléphonique, visiophonique, etc.) provenant du serveur de conférence 3.

Chaque participant peut par la suite accepter ou refuser la mise en communication issue du serveur de conférence afin de refuser ou accepter la conférence.

Enfin, le serveur de conférence 3 peut transmettre au terminal de l'organisateur des informations sur l'état de la mise en communication avec les participants. Ces informations peuvent être transmises soit par l'intermédiaire du canal de communication IP (établissement de la conférence) entre le serveur et les terminaux, soit via le canal de communication multimédia (audio et/ou vidéo) associé (déroulement de la conférence).

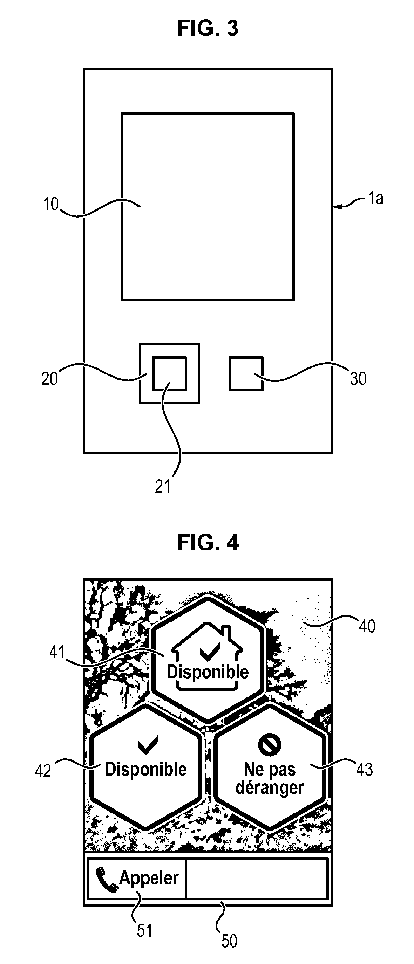

On se réfère maintenant à la **figure 3** qui illustre un terminal mis en oeuvre dans un système conforme à l'invention. Cette figure illustre notamment le terminal 1a de l'organisateur O mais elle peut aussi s'appliquer à un terminal d'un participant à la conférence.

Un tel terminal comprend une unité de stockage 20 dans laquelle est stockée une application logicielle conforme selon l'invention, cette application logicielle comprenant un module d'interface 21 dont l'exécution par un processeur (non représenté) du terminal provoque l'affichage d'une interface utilisateur conforme à l'invention, par l'intermédiaire de laquelle, un utilisateur ("organisateur") peut sélectionner plusieurs participants. L'unité de stockage du terminal 1a comporte en outre une unité de traitement de données 30 adaptée pour mettre en oeuvre l'interface et les traitements relatifs à la génération d'une requête de conférence telle que décrite plus haut, et pour communiquer en conséquence avec le serveur de conférence 3.

Le terminal 1a (1b, 1c) comprend également un écran 10 pour afficher l'interface décrite ci-après. L'écran 10 est de préférence tactile.

On se réfère maintenant à la **figure 4** qui illustre une interface telle qu'affichée sur l'écran du terminal 1a de l'organisateur O.

Cette interface est adaptée pour être mise en oeuvre dans un terminal décrit ci-dessus et comprend une zone principale 40 qui occupe la quasi-totalité de la surface de l'écran 10.

Au-dessous de cette zone principale 40, l'interface comprend une zone secondaire 50 laquelle comprend notamment une zone de validation 51 qui permet à l'organisateur O d'initier la demande de communication à plusieurs participants (N participants plus l'organisateur).

La zone principale 40 comprend en outre trois zones graphiques (icônes, boutons, etc. 41, 42, 43 chacune correspondant à un contact (c'est-à-dire un participant possible).

On note qu'ici la zone principale 40 comprend trois participants sélectionnables mais il est possible d'envisager un nombre plus importants de participants.

Dans chacune des zones 41, 42, 43 correspondant respectivement à un participant, il est possible d'afficher l'état de disponibilité de chacun des participants, cet état de disponibilité étant transmis, par ailleurs, selon un procédé dédié qui n'est pas décrit ici. A ce titre, l'interface peut être prévue indiquer à l'organisateur si un participant a accepté ou refusé la mise en conférence.

L'interface peut être prévue pour que, lorsqu'une icône correspondant à un contact est sélectionnée, celle-ci change de couleur. L'interface peut être également prévue pour qu'une icône sélectionnée puisse être désélectionnée par une nouvelle action graphique sur l'icône.

## Revendications

1. Procédé d'établissement d'une conférence entre un organisateur (O) et une pluralité de participants (P1, P2), au moyen d'un serveur de conférence (3) connecté à un réseau de communication (2), l'organisateur et les participants disposant chacun d'un terminal (1a, 1b, 1c) connecté au réseau de communication (2) et ayant une identité numérique, le procédé comprenant les étapes suivantes :
sélection par l'intermédiaire d'une interface utilisateur affichée dans un terminal (1a) de l'organisateur d'un ensemble de participants à la conférence ;
détermination dans le terminal de l'organisateur pour chaque participant sélectionné d'un identifiant numérique ;
génération dans le terminal de l'organisateur d'une requête de conférence suite à ladite sélection, ladite requête comprenant lesdits identifiants numériques, et transmission au serveur de conférence de ladite requête;
création par le serveur de conférence (3) d'un pont de conférence (30) ayant une identité numérique et transmission au terminal (1a) de l'organisateur l'identité numérique du pont de conférence;
établissement automatique par le terminal (1a) de l'organisateur d'une communication avec le pont de conférence (31).

2. Procédé selon la revendication 1, comprenant une étape d'établissement, par le serveur de conférence (3) d'une pluralité de communications vers les terminaux (1b, 1c) des participants afin de mettre en relation le terminal (1a) de l'organisateur avec les terminaux (1b, 1c) des participants par l'intermédiaire d'un pont de conférence (31).

3. Procédé selon l'une des revendications précédentes, dans lequel chaque terminal (1b, 1c) des participants (P1, P2) reçoit une demande de communication du serveur de conférence (3) par l'intermédiaire du pont de conférence (31).

4. Procédé selon l'une des revendications précédentes, dans lequel les identités numériques des terminaux (1b, 1c) des participants sont transmises par l'intermédiaire d'une requête satisfaisant au protocole HTTP.

5. Procédé selon l'une des revendications précédentes, dans lequel l'identité numérique comprend un numéro d'appel téléphonique.

6. Serveur de conférence (3) adapté pour établir une conférence téléphonique selon un procédé conforme à la revendication 1, entre un organisateur et une pluralité de participants, l'organisateur et les participants ayant respectivement des terminaux (1a, 1b, 1c) connectés à un réseau de communication (2) auquel ledit serveur de conférence (3) est connecté, chaque terminal (1a, 1b, 1c) ayant une identité numérique, le serveur de conférence (3) étant configuré pour recevoir d'un terminal (1a) de l'organisateur de la conférence téléphonique une requête de conférence suite à une sélection par l'intermédiaire d'une interface utilisateur affichée dans un terminal (1a) de l'organisateur d'un ensemble de participants à la conférence, ladite requête comprenant lesdits identifiants numériques.

7. Serveur de conférence selon la revendication 6, configuré en outre pour établir une pluralité de communications vers les terminaux (1b, 1c) des participants afin de mettre en relation le terminal (1a) de l'organisateur avec les terminaux (1b, 1c) des participants par l'intermédiaire d'un pont de conférence (31).

8. Terminal de communication apte à communiquer avec un serveur de conférence apte à établir une conférence entre un organisateur et une pluralité de participants (P1, P2), les participants disposant chacun d'un terminal (1a, 1b, 1c) connecté à un réseau de communication (2) et ayant une identité numérique, le terminal étant configuré pour :
sélectionner par l'intermédiaire d'une interface utilisateur affichée dans ledit terminal un ensemble de participants à la conférence ;
déterminer pour chaque participant sélectionné un identifiant numérique ;
générer une requête de conférence suite à ladite sélection, ladite requête comprenant lesdits identifiants numériques ;
transmettre au serveur de conférence ladite requête;
recevoir du serveur de conférence l'identité numérique d'un pont de conférence créé par ledit serveur en réponse à ladite requête de conférence;
établir automatiquement une communication avec le pont de conférence (31) suite à la réception de l'identité numérique du pont de conférence.

9. Système de communication comprenant au moins trois terminaux (1a, 1b, 1c) selon la revendication 8 connectés à un réseau de communication (2), et un serveur de conférence selon la revendication 6 ou la revendication 7.

10. Programme d'ordinateur comprenant des instructions dont l'exécution par un processeur d'un terminal selon la revendication 8 ou d'un serveur selon la revendication 6 provoque la mise en oeuvre de tout ou partie des étapes d'un procédé selon l'une quelconque des revendications 1 à 5.
